# FASCICULE DE BREVET EUROPEEN

(11) **EP 1 587 205 B1**
(45) Date de publication et mention de la délivrance du brevet: **28.06.2017**
(21) Numéro de dépôt: 05290772.2
(22) Date de dépôt: 07.04.2005
(51) Int. Cl.: H02K 7/06, F16H 25/20, H02G 11/00

(54) **Vérin d'actionnement à capteur associé à sa tige**
Spindelantrieb mit einer mit einem Sensor versehenen Kolbenstange
Linear actuator with a piston rod provided with a sensor

(30) Priorité: 14.04.2004 FR 0403859
(43) Date de publication de la demande: 19.10.2005
(73) Titulaire: TRANSROL, 73000 Chambéry (FR)
(72) Inventeur: Benoit, Laurent, 73800 La Chavanne (FR); Grattier, Jean-Pierre, 73230 St-Alban Leysse (FR); Hude, Pascal, 74370 Metz-Tessy (FR)
(74) Mandataire: Casalonga, Axel

(56) Documents cités:
- EP-A- 0 482 360
- US-A- 2 750 492
- US-A- 5 634 373
- PATENT ABSTRACTS OF JAPAN vol. 2003, no. 12, 5 décembre 2003 (2003-12-05) -& JP 2003 287065 A (NISSIN KOGYO CO LTD), 10 octobre 2003 (2003-10-10)

## Description

La présente invention concerne le domaine des vérins d'actionnement, en particulier le domaine des vérins électriques comprenant un moyen d'entraînement vis-écrou à rouleaux et à moteur électrique intégré.

Le but de la présente invention est d'équiper des vérins d'actionnement d'un capteur, en particulier d'un capteur d'effort appliqué à la tige du vérin.

Dans le brevet JP-A-2003287065, il est proposé un vérin d'actionnement qui comprend un capteur porté par la tige du vérin et un fil de connexion électrique relié au capteur et qui s'étend vers l'arrière dans un canal longitudinal de longueur variable, formé dans des parties qui présentent entre elles des espaces radiaux:

Le vérin d'actionnement selon l'invention comprend un corps longitudinal de vérin présentant une paroi transversale avant et une paroi transversale arrière, une tige longitudinale de vérin traversant une paroi transversale avant et présentant une extrémité arrière située à distance de ladite paroi transversale arrière ; un moyen d'entraînement longitudinal de la tige de vérin par rapport au corps de vérin, un capteur porté par une partie d'extrémité avant de la tige de vérin ; ainsi qu'au moins un fil de connexion électrique qui est relié audit capteur et qui s'étend dans un canal longitudinal à longueur variable reliant ladite partie d'extrémité avant de la tige de vérin et ladite paroi transversale arrière du corps de vérin et débouchant à l'arrière de cette paroi transversale arrière, ledit au moins un fil de connexion électrique sortant par l'extrémité arrière de ce canal longitudinal.

Selon l'invention, le vérin comprend des moyens de liaison déformables longitudinalement comprenant au moins deux parties longitudinales tubulaires montées de façon télescopique et délimitant ledit canal longitudinal.

Selon un mode particulier de réalisation de l'invention, ledit fil de connexion électrique présente de préférence, dans ledit canal longitudinal, au moins une partie enroulée sous la forme d'un serpentin.

Selon un mode particulier de réalisation de l'invention, ledit canal longitudinal présente de préférence une partie longitudinale de section accrue dans laquelle s'étend ladite partie enroulée sous la forme d'un serpentin dudit fil de connexion électrique.

Selon un mode particulier de réalisation de l'invention, des moyens sont de préférence prévus pour tenir ledit fil dans la partie arrière dudit canal longitudinal.

Selon un mode particulier de réalisation de l'invention, ladite partie d'extrémité avant de la tige de vérin est constituée par une tête de liaison rapportée.

Selon un mode particulier de réalisation de l'invention, lesdits moyens de liaison comprennent de préférence un premier tube longitudinal fixé à ladite partie d'extrémité avant de la tige de vérin et un second tube longitudinal fixé à ladite paroi transversale arrière, ces tubes étant montées de façon télescopique.

Selon un mode particulier de réalisation de l'invention, le premier tube est engagé dans le second tube, la tige de vérin comprenant une paroi tubulaire longitudinale dans laquelle est engagé ledit second tube.

Selon un mode particulier de réalisation de l'invention, le tube longitudinal recevant intérieurement l'autre tube longitudinal présente de préférence un épaulement distant de l'extrémité de cet autre tube, de façon à déterminer, entre cet épaulement et cette extrémité, une partie longitudinale de section accrue, ledit fil de connexion électrique présentant, dans cette partie de section accrue, une partie enroulée sous la forme d'un serpentin.

Selon un mode particulier de réalisation de l'invention, lesdits moyens de liaison peuvent avantageusement comprendre une paroi tubulaire de la tige de vérin et au moins un tube longitudinal relié à ladite paroi transversale arrière et accouplé télescopiquement à ladite paroi tubulaire de la tige de vérin.

Selon un mode particulier de réalisation de l'invention, le moyen d'entraînement longitudinal comprend de préférence des rouleaux à parties filetés extérieurement en prise d'une part avec une partie filetée extérieurement de la tige de vérin et une partie filetée intérieurement d'un fourreau longitudinal et un moteur électrique dont le rotor est porté par ledit fourreau et le stator est porté par le corps de vérin.

Selon un mode particulier de réalisation de l'invent lesdites parties filetées sont de préférence telles que lesdits rouleaux se déplacent longitudinalement avec la tige de vérin.

La présente invention sera mieux comprise à l'étude d'un vérin d'actionnement décrit à titre d'exemple non-limitatif et illustré schématiquement par le dessin sur lequel :
- la figure 1 représente une coupe longitudinale d'un vérin selon l'invention, dans une position reculée ou rentrée ;

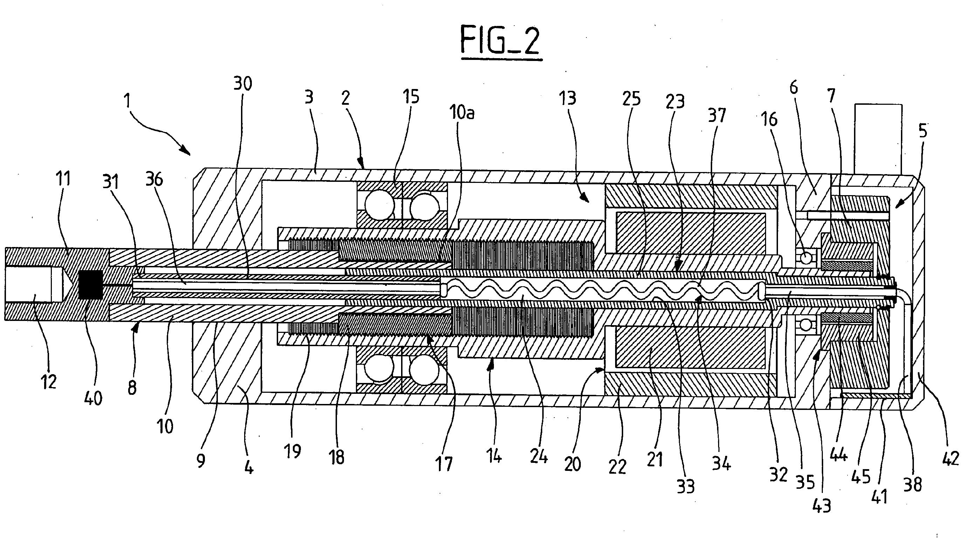

- la figure 2 représente une coupe longitudinale du vérin de la figure 1, dans une position avancée ou sortie ;
- et la figure 3 représente un détail agrandi dudit vérin.

Le vérin d'actionnement 1 représenté sur les figures comprend un corps de vérin 2 qui présente une paroi longitudinale tubulaire 3 et, aux extrémités de cette paroi, une paroi transversale avant 4 et une paroi transversale arrière 5 constituée d'une partie annulaire intérieure 6 en saillie dans la paroi longitudinale 3 et d'une bague arrière rapportée 7.

Le vérin 1 comprend une tige longitudinale de vérin 8 qui s'étend au travers d'un passage 9 de la paroi transversale avant 4 du corps 2 et qui comprend une partie longitudinale tubulaire 10 dont l'extrémité arrière est à distance de la paroi arrière 5 du corps 2 et une partie avant de même diamètre constituée par une tête rapportée de liaison 11 fixée sur cette partie 10 par exemple par vissage dans son alésage, cette tête présentant par exemple un évidemment frontal fileté 12 en vue de son accouplement à un mécanisme à actionner non rotatif.

Le vérin 1 comprend en outre un moyen d'entraînement 13 intégré constitué de la manière suivante.

Ce moyen d'entraînement 13 comprend un fourreau longitudinal 14 qui est monté dans le corps 2 par l'intermédiaire d'un roulement à billes avant 15 associé à la partie avant de la paroi longitudinale 3 du corps 2 et d'un roulement à billes arrière 16 associé à la partie annulaire 6 de la paroi transversale 5 de ce corps, de telle sorte que ce fourreau 14 est maintenu longitudinalement.

Le moyen d'entraînement 13 comprend également un sytème vis-écrou 17 interposé entre la tige 8 et le fourreau 14.

Ce système 14 comprend pour l'essentiel une multiplicité de rouleaux longitudinaux 18 à parties filetées extérieurement, en prise avec une partie arrière 10a filetée extérieurement de la partie longitudinale tubulaire 10 de la tige 8 et avec une partie intérieure avant 19 filetée intérieurement du fourreau longitudinal 14.

De façon connue en soi, les parties filetée ci-dessus sont telles que lorsque le fourreau est entraîné en rotation, la tige 8 se déplace longitudinalement par rapport au corps 2 et les rouleaux 18 suivent les mouvements longitudinaux de cette tige 8.

Pour entraîner en rotation le fourreau 14, le moyen d'entraînement 13 comprend en outre un moteur électrique 20 dont le rotor annulaire 21 est monté périphériquement sur une partie du fourreau 14 voisine de la paroi transversale arrière 5 du corps 2 et dont le stator 21 est monté à l'intérieur de la partie du corps 2 adjacente à cette paroi arrière 5.

Le vérin 1 comprend également des moyens de liaison 23 déformables longitudinalement et adaptés pour délimiter un canal longitudinal 24 de longueur variable reliant la tête 11 de la tige 8 et la paroi transversale arrière 5 du corps 2 et débouchant à l'arrière de cette paroi.

Les moyens de liaison 23 comprennent un tube longitudinal cylindrique 25 dont la partie avant est engagée de façon coulissante et accouplée télescopiquement dans la partie longitudinale tubulaire 10 de la tige 8 et dont la partie d'extrémité arrière traverse un passage 26 de la bague arrière 7 de la paroi transversale arrière 5 et est fixée longitudinalement et en rotation sur cette dernière, de telle sorte que le tube longitudinal 25 s'étend, entre ses parties ci-dessus, de préférence avec jeu au travers du fourreau longitudinal 14.

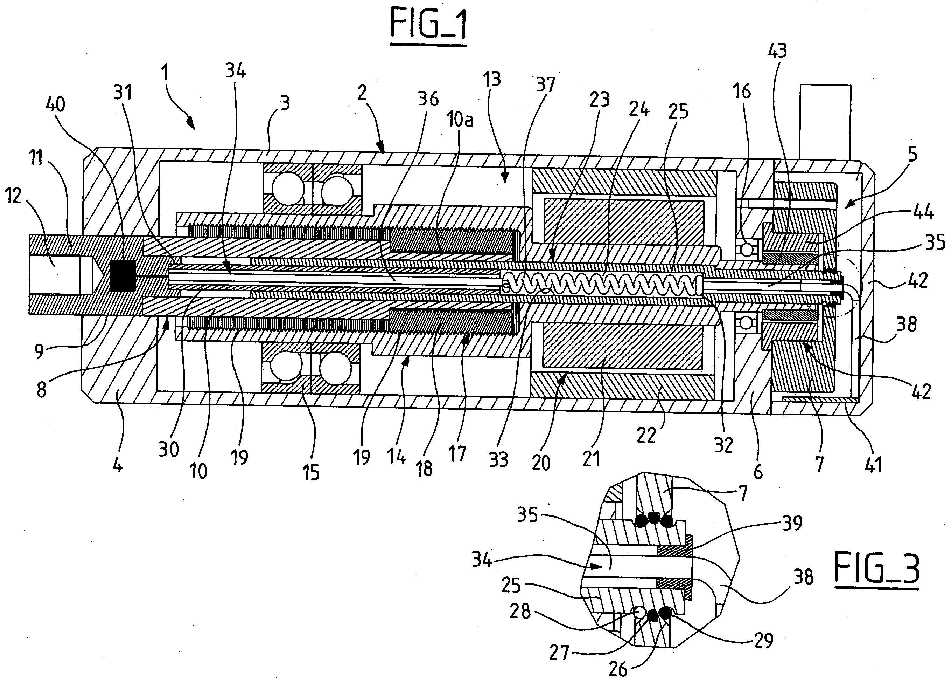

Pour la fixation ci-dessus, dans l'exemple représenté plus particulièrement sur la figure 3, un joint annulaire 27 est interposé à force dans le passage 26, entre la bague 7 et le tube longitudinal 25, et est engagé dans des gorges annulaires de ces derniers. De plus, des joncs annulaires élastiques 28 et 29 sont engagés dans des gorges périphériques du tube longitudinal 25, situées de part et d'autre du joint annulaire 27, et coopèrent avec la bague 7 de part et d'autre du passage 26.

Les moyens de liaison 23 comprennent en outre un tube longitudinal cylindrique 30 dont la partie arrière est engagée de façon coulissante et accouplée télescopiquement dans la partie avant du tube longitudinal 25 et dont la partie d'extrémité avant est engagée et fixée dans un évidement arrière 31 de la tête 11 et fixée dans cet évidement par exemple par emmanchement à force.

Le tube longitudinal 25 présente un épaulement annulaire intérieur 32 situé à distance de l'extrémité arrière du tube longitudinal 30, de telle sorte qu'est ménagé un espace longitudinal 33 de diamètre accru entre cet épaulement 32 et cette extrémité.

Il résulte de ce qui précède que, lorsque la tige 8 se déplace longitudinalement, la partie d'extrémité avant du tube longitudinal 25 glisse longitudinalement, télescopiquement, dans l'espace séparant la partie longitudinale tubulaire 10 de cette tige 8 et le tube longitudinal 30. Ainsi, les tubes longitudinaux télescopiques 25 et 30 déterminent le canal longitudinal 24 de longueur variable, l'espace 33 de diamètre accru étant aussi de longueur variable.

Dans le canal longitudinal 24, est installé un fil de connexion électrique gainé 34, à au moins un brin, qui présente une partie rectiligne arrière 35 s'étendant dans la partie arrière tube longitudinal 25 et dont l'extrémité avant est fixée à la tête 11 de la tige longitudinale 8 par exemple par collage ou pincement, une partie rectiligne 36 s'étendant dans le tube longitudinal 30 et une partie médiane 37 s'étendant dans l'espace 33 de diamètre accru et enroulée sous la forme d'un serpentin. Le fil de connexion électrique 34 sort par l'extrémité arrière du canal longitudinal 24 et présente une partie 38 extérieure à ce canal 24.

Pour le maintien de la partie arrière du fil de connexion électrique 34, un presse-étoupe ou joint annulaire 39 est par exemple interposé entre ce fil 34 et la partie arrière du tube longitudinal 25.

L'extrémité avant du fil 34 est reliée électriquement à un capteur 40 intégré par tous moyens à la tête 11 de la tige longitudinale 8 et représenté schématiquement, par exemple à un capteur d'effort appliqué à cette tige 8 et l'extrémité arrière de ce fil 34 est par exemple reliée électriquement à un circuit électronique 41 installé dans un capot arrière 42 fixé à l'arrière du corps 2 et représenté schématiquement.

Il résulte de ce qui précède que, lorsque la tige longitudinale 8 se déplace longitudinalement, les parties 35 et 38 du fil de connexion électrique 34 solidaires du tube longitudinal 25 restent immobiles, sa partie 36 solidaire de la tête 11 suit les mouvements de la tige longitudinale 8 et sa partie enroulée 37 s'allonge ou se réduit en fonction du sens de déplacement de la tige longitudinale 8, cette partie 37 étant réduite sur la figure 1 et allongée sur la figure 3.

Ainsi, les informations électriques issues du capteur 40 peuvent être transmises au circuit électronique 41 via le fil de connexion électrique 34 de longueur variable, qui s'étend dans le canal longitudinal 24 de longueur variable de telle sorte qu'il n'est en contact qu'avec des parties mobiles longitudinalement du vérin constituées par les tubes télescopiques 25 et 30 et qui est protégé vis-à-vis des parties rotatives du vérin, en particulier du fourreau rotatif 14.

Par ailleurs, le vérin 1 est équipé d'un capteur 43 de position angulaire dont le rotor 44 est porté par la partie arrière du fourreau longitudinal 14 et dont le stator 45 est porté par la bague 7 de la paroi arrière 5, en avant du passage 26 de cette bague 7 et en arrière du roulement 16.

En outre, le vérin 1 présente, entre autres et de façon connue en soi, des moyens de connexion électrique du moteur 20, du circuit électronique 41 et du capteur 43, qui ne sont pas représentés sur le dessin.

La présente invention ne se limite pas à l'exemple ci-dessus décrit.

En particulier, les moyens d'entraînement à vis-écrou à rouleaux pourraient être remplacés par tous moyens connus de transformation d'un mouvement de rotation en un mouvement de translation de la tige de vérin par rapport au corps de vérin.

Bien des variantes sont possibles sans sortir du cadre défini par les revendications annexées.

## Revendications

1. Vérin d'actionnement comprenant un corps longitudinal de vérin (2) présentant une paroi transversale avant et une paroi transversale arrière, une tige longitudinale de vérin (8) traversant une ladite paroi transversale avant et présentant une extrémité arrière située à distance de ladite paroi transversale arrière, un moyen d'entraînement longitudinal de la tige de vérin par rapport au corps de vérin, un capteur (40) porté par une partie d'extrémité avant (11) de la tige de vérin (8), ainsi qu'au moins un fil de connexion électrique (34) qui est relié audit capteur et qui s'étend dans ledit un canal longitudinal (24) à longueur variable reliant ladite partie d'extrémité avant (11) de la tige de vérin et ladite paroi transversale arrière (5) du corps de vérin (2) et débouchant à l'arrière de cette paroi transversale arrière, ledit au moins un fil de connexion électrique sortant par l'extrémité arrière de ce canal longitudinal ; **caractérisé par le fait qu'**il comprend des moyens de liaison (23) déformables longitudinalement comprenant au moins deux parties longitudinales tubulaires (25, 30) montées de façon télescopique et délimitant ledit canal longitudinal (24).

2. Vérin selon la revendication 1, **caractérisé par le fait que** ledit fil de connexion électrique présente, dans ledit canal longitudinal, au moins une partie (37) enroulée sous la forme d'un serpentin.

3. Vérin selon l'une des revendications 1 et 2, **caractérisé par le fait que** ledit canal longitudinal (24) présente une partie longitudinale (33) de section accrue dans laquelle s'étend ladite partie enroulée sous la forme d'un serpentin dudit fil de connexion électrique.

4. Vérin selon l'une quelconque des revendications précédentes, **caractérisé par le fait qu'**il comprend des moyens (39) pour tenir ledit fil dans la partie arrière dudit canal longitudinal.

5. Vérin selon l'une quelconque des revendications précédentes, **caractérisé par le fait que** ladite partie d'extrémité avant de la tige de vérin est constituée par une tête de liaison rapportée (11).

6. Vérin selon l'une quelconque des revendications 1 à 5, **caractérisé par le fait que** lesdits moyens de liaison déformables longitudinalement comprennent un premier tube longitudinal (30) fixé à ladite partie d'extrémité avant (11) de la tige de vérin (8) et un second tube longitudinal (25) fixé à ladite paroi transversale arrière (5), ces tubes étant montés de façon télescopique.

7. Vérin selon la revendication 6, **caractérisé par le fait que** le premier tube (30) est engagé dans le second tube (25), la tige de vérin (8) comprenant une paroi tubulaire longitudinale (10) dans laquelle est engagé ledit second tube (25).

8. Vérin selon la revendication 6, **caractérisé par le fait que** le tube longitudinal (25) recevant intérieurement l'autre tube longitudinal (30) présente un épaulement (32) distant de l'extrémité de cet autre tube (30), de façon à déterminer, entre cet épaulement et cette extrémité, une partie longitudinale (33) de section accrue, ledit fil de connexion électrique (34) présentant, dans cette partie de section accrue, une partie (37) enroulée sous la forme d'un serpentin.

9. Vérin selon l'une quelconque des revendications 1 à 5, **caractérisé par le fait que** lesdits moyens de liaison déformables longitudinalement comprennent une paroi tubulaire (10) de la tige de vérin (8) et au moins un tube longitudinal (25) relié à ladite paroi transversale arrière (5) et accouplé télescopiquement à ladite paroi tubulaire (10) de la tige de vérin (8)-.

10. Vérin selon l'une quelconque des revendications précédentes, **caractérisé par le fait que** le moyen d'entraînement longitudinal (13) comprend des rouleaux (18) à parties filetés extérieurement en prise d'une part avec une partie (10a) filetée extérieurement de la tige de vérin (8) et une partie (19) filetée intérieurement d'un fourreau longitudinal (14) et un moteur électrique (20) dont le rotor (21) est porté par ledit fourreau (14) et le stator (22) est porté par le corps de vérin (2).

11. Vérin selon la revendication 10, **caractérisé par le fait que** lesdites parties filetées sont telles que lesdits rouleaux (18) se déplacent longitudinalement avec la tige de vérin (8).

## Patentansprüche

1. Betätigungszylinder, der Folgendes umfasst: einen longitudinalen Zylinderkörper (2), der eine vordere Querwand und eine hintere Querwand aufweist, einen longitudinalen Zylinderstift (8), der durch die vordere Querwand verläuft und ein hinteres Ende aufweist, das sich in einem Abstand von der hinteren Querwand befindet, ein Mittel für den longitudinalen Antrieb des Zylinderstifts in Bezug auf den Zylinderkörper, einen Sensor (40), der von einem vorderen Endabschnitt (11) des Zylinderstifts (8) getragen wird, sowie wenigstens einen Draht (34) für eine elektrische Verbindung, der mit dem Sensor verbunden ist und sich in einem longitudinalen Kanal (24) mit variabler Länge erstreckt und den vorderen Endabschnitt (11) des Zylinderstifts mit der hinteren Querwand (5) des Zylinderkörpers (2) verbindet und in den hinteren Bereich dieser hinteren Querwand mündet, wobei der wenigstens eine Draht für elektrische Verbindung von dem hinteren Ende dieses longitudinalen Kanals austritt; **gekennzeichnet durch** longitudinal verformbare Verbindungsmittel (23), die wenigstens zwei röhrenförmige longitudinale Abschnitte (25, 30) umfassen, die teleskopartig montiert sind und den longitudinalen Kanal (24) begrenzen.

2. Zylinder nach Anspruch 1, **dadurch gekennzeichnet, dass** der Draht für elektrische Verbindung in dem longitudinalen Kanal wenigstens einen serpentinenförmig aufgewickelten Abschnitt (37) aufweist.

3. Zylinder nach einem der Ansprüche 1 und 2, **dadurch gekennzeichnet, dass** der longitudinale Kanal (24) einen longitudinalen Abschnitt (33) mit erweitertem Querschnitt aufweist, in dem sich der serpentinenförmig aufgewickelt Teil des Drahtes für elektrische Verbindung erstreckt.

4. Zylinder nach einem der vorhergehenden Ansprüche, **dadurch gekennzeichnet, dass** er Mittel (39) umfasst, um den Draht in dem hinteren Abschnitt des longitudinalen Kanals zu halten.

5. Zylinder nach einem der vorhergehenden Ansprüche, **dadurch gekennzeichnet, dass** der vordere Endabschnitt des Zylinderstifts durch einen angefügten Verbindungskopf (11) gebildet ist.

6. Zylinder nach einem der Ansprüche 1 bis 5, **dadurch gekennzeichnet, dass** die longitudinal verformbaren Verbindungsmittel ein erstes longitudinales Rohr (30), das an dem vorderen Endabschnitt (11) des Zylinderstifts (8) befestigt ist, und ein zweites longitudinales Rohr (25), das an der hinteren Querwand (5) befestigt ist, umfassen, wobei diese Rohre teleskopartig montiert sind.

7. Zylinder nach Anspruch 6, **dadurch gekennzeichnet, dass** das erste Rohr (30) in dem zweiten Rohr (25) in Eingriff ist, wobei der Zylinderstift (8) eine longitudinale röhrenförmigen Wand (10) aufweist, in der das zweite Rohr (25) in Eingriff ist.

8. Zylinder nach Anspruch 6, **dadurch gekennzeichnet, dass** das longitudinale Rohr (25), das in sich das andere longitudinale Rohr (30) aufnimmt, eine von dem Ende dieses anderen Rohrs (30) entfernte Schulter (32) aufweist, derart, dass zwischen dieser Schulter und diesem Ende ein longitudinaler Abschnitt (33) mit erweitertem Querschnitt festgelegt ist, wobei der Draht (34) für eine elektrische Verbindung in diesem Abschnitt mit erweitertem Querschnitt einen serpentinenförmig aufgewickelten Abschnitt (37) aufweist.

9. Zylinder nach einem der Ansprüche 1 bis 5, **dadurch gekennzeichnet, dass** die longitudinal verformbaren Verbindungsmittel eine ringförmige Wand (10) des Zylinderstifts (8) und wenigstens ein longitudinales Rohr (25), dass mit der hinteren Querwand (5) verbunden ist und mit der röhrenförmigen Wand (10) des Zylinderstifts (8) teleskopartig gekoppelt ist, umfassen.

10. Zylinder nach einem der vorhergehenden Ansprüche, **dadurch gekennzeichnet, dass** das Mittel (13) für longitudinalen Antrieb Walzen mit Außengewindeabschnitten, die einerseits mit einem Außengewindeabschnitt (10a) des Zylinderstiftes (8) und mit einem Innengewindeabschnitt einer longitudinalen Hülse (14) in Eingriff sind, und einen Elektromotor (20), dessen Rotor (21) von der Hülse (14) getragen wird und dessen Stator (22) von dem Zylinderkörper (2) getragen wird, umfasst.

11. Zylinder nach Anspruch 10, **dadurch gekennzeichnet, dass** die Gewindeabschnitte derart sind, dass sich die Walzen (18) mit dem Zylinderstift (8) longitudinal verlagern.

## Claims

1. Actuating cylinder comprising a longitudinal cylinder body (2) having a front transverse wall and a rear transverse wall, a longitudinal cylinder rod (8) traversing a the said front transverse wall and having a rear end situated at a distance from the said rear transverse wall, a longitudinal means of operating the cylinder rod relative to the cylinder body, a sensor (40) supported by a front end portion (11) of the cylinder rod (8), and at least one electric connecting wire (34) which is connected to the said sensor and which extends in the said a longitudinal channel (24) of variable length connecting the said front end portion (11) of the cylinder rod and the said rear transverse wall (5) of the cylinder body (2) and emerging at the rear of this rear transverse wall, the said at least one electric connecting wire exiting via the rear end of this longitudinal channel; **characterized in that** it comprises longitudinally deformable linking means (23) comprising at least two tubular longitudinal portions (25, 30) mounted telescopically and delimiting the said longitudinal channel (24).

2. Cylinder according to Claim 1, **characterized in that** the said electric connecting wire has, in the said longitudinal channel, at least one portion (37) rolled up in the form of a coil.

3. Cylinder according to either of Claims 1 and 2, **characterized in that** the said longitudinal channel (24) has a longitudinal portion (33) of increased section in which extends the said portion of the said electric connecting wire rolled up in the form of a coil.

4. Cylinder according to any one of the preceding claims, **characterized in that** it comprises means (39) for holding the said wire in the rear portion of the said longitudinal channel.

5. Cylinder according to any one of the preceding claims, **characterized in that** the said front end portion of the cylinder rod consists of a fitted connection head (11).

6. Cylinder according to any one of Claims 1 to 5, **characterized in that** the said longitudinally deformable linking means comprise a first longitudinal tube (30) attached to the said front end portion (11) of the cylinder rod (8) and a second longitudinal tube (25) attached to the said rear transverse wall (5), these tubes being mounted telescopically.

7. Cylinder according to Claim 6, **characterized in that** the first tube (30) is engaged in the second tube (25), the cylinder rod (8) comprising a longitudinal tubular wall (10) in which the said second tube (25) is engaged.

8. Cylinder according to Claim 6, **characterized in that** the longitudinal tube (25) receiving internally the other longitudinal tube (30) has a shoulder (32) at a distance from the end of this other tube (30), so as to determine, between this shoulder and this end, a longitudinal portion (33) of increased section, the said electric connecting wire (34) having, in this portion of increased section, a portion (37) rolled up in the form of a coil.

9. Cylinder according to any one of Claims 1 to 5, **characterized in that** the said longitudinally deformable linking means comprise a tubular wall (10) of the cylinder rod (8) and at least one longitudinal tube (25) connected to the said rear transverse wall (5) and coupled telescopically to the said tubular wall (10) of the cylinder rod (8).

10. Cylinder according to any one of the preceding claims, **characterized in that** the longitudinal operating means (13) comprises rollers (18) with externally threaded portions engaged on the one hand with an externally threaded portion (10a) of the cylinder rod (8) and an internally threaded portion (19) of a longitudinal sleeve (14) and an electric motor (20) whose rotor (21) is supported by the said sleeve (14) and the stator (22) is supported by the cylinder body (2).

11. Cylinder according to Claim 10, **characterized in that** the said threaded portions are such that the said rollers (18) move longitudinally with the cylinder rod (8).
